# EUROPEAN PATENT SPECIFICATION

(11) **EP 2 626 223 B1**
(45) Date of publication and mention of the grant of the patent: **29.10.2014**
(21) Application number: 13154192.2
(22) Date of filing: 06.02.2013
(51) Int. Cl.: B60H 1/00, B60H 1/32, B60H 3/02, F25B 30/02

(54) **Air conditioner for electric vehicle**
Klimaanlage für ein Elektrofahrzeug
Climatiseur pour véhicule électrique

(30) Priority: 07.02.2012 KR 20120012193
(43) Date of publication of application: 14.08.2013
(73) Proprietor: LG Electronics Inc., Seoul 150-721 (KR)
(72) Inventor: Lee, Donghyuk, 137-724 Seoul (KR); Kang, Chisuk, 137-724 Seoul (KR); Hong, Seongho, 137-724 Seoul (KR)
(74) Representative: Vossius & Partner

(56) References cited:
- EP-A1- 1 568 952
- EP-A2- 1 262 347
- EP-A2- 1 733 906
- WO-A1-01/40004

## Description

An air conditioner for an electric vehicle is disclosed herein.

Air conditioners for electric vehicles are known. However, they suffer from various disadvantages. WO 01/40004, which is considered as the closest prior art, discloses an air conditioner for an electric vehicle according to all the features of the preamble of claim 1. It is the object of the present invention to provide an air conditioner for electric vehicle and a method of operating thereof providing improved characteristics. This object is solved with the features of the claims.

Embodiments will be described in detail with reference to the following drawings in which like reference numerals refer to like elements, and wherein:
FIG. 1 is a conceptual diagram of an air conditioner for an electric vehicle according to an embodiment;
FIG. 2 is a block diagram of a controller in the air conditioner of FIG. 1;
FIG. 3 is a conceptual diagram illustrating a first or cold district heating operation mode provided in the air conditioner of FIG. 1;
FIG. 4 is a conceptual diagram illustrating a second or normal heating operation mode provided in the air conditioner of FIG. 1;
FIGS. 5A-5B are graphs illustrating heating performance and coefficient of heating performance, respectively, of the air conditioner of FIG. 1;
FIG. 6 is a conceptual diagram illustrating a cooling operation mode provided in the air conditioner of FIG. 1;
FIGs. 7A-7B are graphs illustrating cooling performance and coefficient of cooling performance, respectively, of the air conditioner of FIG. 1;
FIG. 8 is a conceptual diagram illustrating an air conditioner for an electric vehicle as a reference example;
FIG. 9 is a conceptual diagram illustrating a second or normal heating operation mode provided in the air conditioner of FIG. 8;
FIG. 10 is a conceptual diagram illustrating a dehumidifying mode of the air conditioner of FIG. 1; and
FIG. 11 is a conceptual diagram illustrating a dehumidifying mode of the air conditioner of FIG. 8.

An air conditioner for an electric vehicle according to embodiments will be described in detail with reference to the accompanying drawings. Specific embodiments will be explained in the drawings and the detailed description. However, it is to be understood that embodiments are not limited in application to the details of construction and the arrangement of components set forth in the following description or illustrated in the following drawings.

Reference may now be made in detail to specific embodiments, examples of which may be illustrated in the accompanying drawings. Wherever possible, like reference numbers have been used throughout to refer to the same or like parts. It is to be understood that the terminology defined in a dictionary used herein is meant to encompass the meaning thereof disclosed in related arts. Unless for the purpose of description and should not be regarded as limiting, the terminology is not meant to be ideal or exaggerated.

It will be understood that when an element is referred to with 'first' and 'second', the element is not limited by them. They may be used only for a purpose of distinguishing the element from the other elements.

With energy cost saving trends, there have been increasing demands for eco-friendly electric vehicles (EV). In the U.S.A and Europe, Clean Air Acts mandate supply of electric vehicles. In Korea, there has been research and interest in green cars as low-carbon green growth.

A motor for driving an electric vehicle and a battery for operating various electric mechanisms are mounted in the electric vehicle. In addition, an air conditioner for cooling in the summer and heating in the winter may be mounted in such an electric vehicle.

The air conditioner has a cycle to transfer heat as refrigerant is circulated through compression, condensation, expansion, and evaporation processes in order. Such a cooling cycle enables the air conditioner to perform a cooling cycle to exhaust indoor heat outside in the summer and a heating cycle of a heat pump to provide heat in the winder via a reverse circulation order of the cooling cycle. In addition, the air conditioner for the electric vehicle may use the battery as a drive source of the motor, the motor having a mechanism for driving a compressor.

At temperatures below zero in a cold area, the heat exchange ability of the heat pump may not be sufficient and may deteriorate the performance and coefficient of heating performance (COP) of the air conditioner. If the battery is used too much to enhance the performance and COP of the air conditioner, the electric vehicle may have a disadvantage of noticeably deteriorating efficiency. Accordingly, an electric vehicle is required to have an air conditioner having enhanced performance and COP.

In addition, inner or outer humidity is applied to an indoor space of the electric vehicle because of characteristics of the electric vehicle, and frost generated on a front glass window may obstruct a driver's field of vision. A conventional air conditioner converts a heating operation into a cooling operation for dehumidification, such that heating for the indoor space may be performed for a predetermined time period disadvantageously. As a result, there has been a growing demand for an air conditioner for an electric vehicle that can perform continuous heating even in a dehumidification operation.

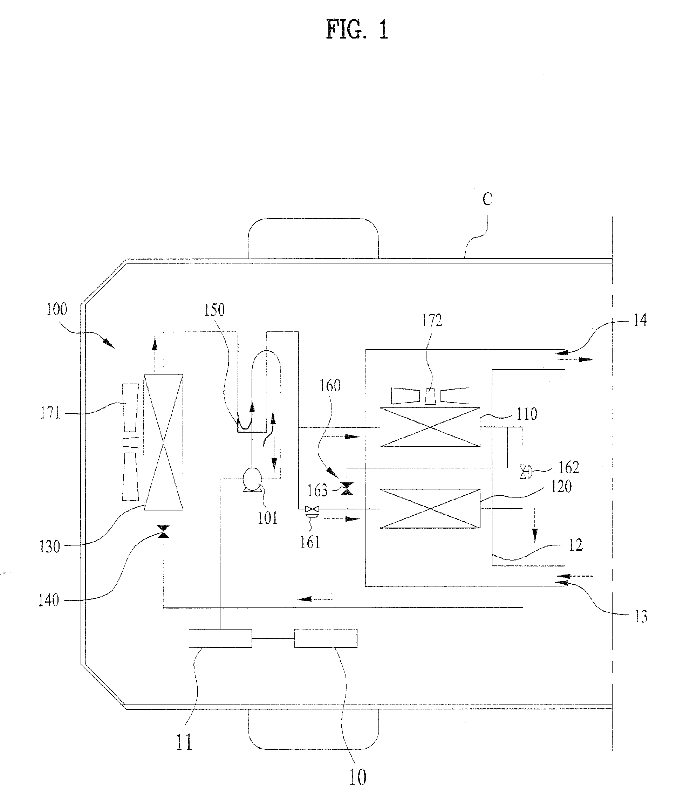

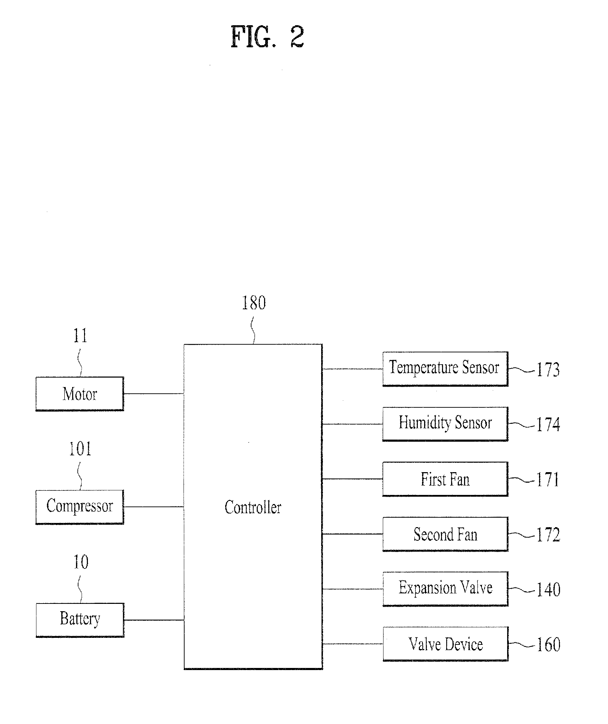

FIG. 1 is a conceptual diagram of an air conditioner for an electric vehicle according to an embodiment. FIG. 2 is a block diagram of a controller provided in the air conditioner of FIG. 1.

The air conditioner 100 according to this embodiment is an air conditioner operated using a battery as a driving source. The air conditioner 100 may include an air conditioning device that cools or heats an indoor space of the electric vehicle (C) and a controller 180 that controls the air conditioning device. In addition, the electric vehicle (C) may include a battery 10 and a motor 11, which may be used as a driving source. The motor 11 may drive a compressor 101.

The air conditioner 100 may further include a heat exchanger (not shown) having a working fluid (for example, water) that exchanges heat generated from the battery 10 and the motor 11, and a plurality of pipes that flows the working fluid therethrough. Latent heat exchanged by the battery 10 and the motor 11 may be used to heat a refrigerant circulating in the air conditioning device or to directly heat the indoor space.

The air conditioning device may include the compressor 101, which compresses the refrigerant, first and second indoor heat exchangers 110 and 120 that suck the refrigerant exhausted from the compressor 101, an expansion valve 140 that expands the refrigerant having passed one of the indoor heat exchangers 110 and 120, an outdoor heat exchanger 130 that sucks the refrigerant having passed the expansion valve 140, at least one valve(or valve device) 160 that adjusts a flow rate of the refrigerant sucked into the first and second indoor heat exchangers 110 and 120, and a controller 180 that controls the at least one valve 160 to flow the refrigerant into the first indoor heat exchanger 110 and the second indoor heat exchanger 120 in series or in parallel selectively according to a heating operation mode.

The term indoor or interior space refers to the passenger cab of the electric vehicle. The term indoor heat exchanger refers to a heat exchanger that heat exchanges with indoor air or air within the indoor or interior space of the electric vehicle. The term outdoor heat exchanger refers to a heat exchanger that heat exchanges with outdoor air or air outside of the interior space of the electric vehicle.

The controller 180 may check a battery residue and an outdoor temperature, and it may control the valve device 160 to supply the refrigerant to at least one of the first indoor heat exchanger 110 and the second indoor heat exchanger 120 to meet a required heating performance and desired coefficient of heating performance of the air conditioning device. More particularly, the controller 180 may check a battery residue and an outdoor temperature. If there is sufficient battery residue to drive the vehicle, and based on the sensed outdoor temperature, the controller 180 may control the valve 160 to supply the refrigerant to at least one of the first and indoor heat exchanger 110 and the second indoor heat exchanger 120 to meet a required heating performance and desired coefficient of heating performance of the air- conditioning unit device.

The first and second indoor heat exchangers 110 and 120 discussed herein refer to heat exchangers that exchange heat with an indoor space of the electric vehicle (C) and the outdoor heat exchanger 130 refers to a heat exchanger arranged in a front portion of the electric vehicle that exchanges heat with outdoor air. In a cold district heating operation mode the first indoor heat exchanger 110 and the second indoor heat exchanger 120 may be connected to the compressor 101 in parallel, and in a dehumidifying mode, the first and second heat exchangers 110 and 120 may be connected in series to the compressor 101.

More specifically, the first and second indoor heat exchangers 110 and 120 may be in communication with the indoor space of the electric vehicle (C), and they may be arranged in an indoor duct 12 having an inlet 13 through which indoor air may be sucked and an outlet 14 through which heat-exchanged air may be exhausted to the indoor space. According to this embodiment, the first indoor heat exchanger 110 may be arranged adjacent to the outlet 14 of the indoor duct 12 and the second indoor heat exchanger 120 may be arranged adjacent to the inlet 13 of the indoor duct 12.

Also, the outlet 14 of the indoor duct 12 may include a first outlet hole (not shown), through which air may be exhausted toward the indoor space, and a second outlet hole (not shown), through which air may be exhausted toward a front window, which may be formed of glass. A damper may be provide at each of the outlet holes to adjust a flow rate of the air exhausted toward the indoor space and the front window. The heat-exchanged air may be exhausted only to the indoor space or only to the front window or to both of the indoor space and the front window based on an open degree of each damper. Air dehumidified in a dehumidifying mode, which will be described later, may be supplied to the front window.

The air conditioning device may further include a four-way valve 150. The four-way valve 150 may enable the air conditioning device to selectively perform a heating operation mode and a cooling operation mode.

In the heating operation mode, the refrigerant exhausted from the compressor 101 may be supplied to at least one of the first indoor heat exchanger 110 or the second indoor heat exchanger 120. The refrigerant may be condensed while first passing the at least one of the first indoor heat exchanger 110 and the second indoor heat exchanger 120, and it may heat the indoor air. Thereafter, the refrigerant may pass the expansion valve 140 and the outdoor heat exchanger 130 sequentially, to be evaporated while passing the outdoor heat exchanger 130.

In the cooling operation mode, the refrigerant exhausted from the compressor 101 may be sucked into the outdoor heat exchanger 130 and condensed while passing the outdoor heat exchanger 130. Thereafter, the refrigerant may pass the expansion vale 140 and at least one of the first indoor heat exchanger 110 and the second indoor heat exchanger 120 sequentially, to cool the indoor air with being evaporated while passing the at least one of the first indoor heat exchanger 110 or the second indoor heat exchanger 120.

The air conditioning device may include a first fan 171 mounted adjacent to the outdoor heat exchanger 130 and a second fan 172 mounted adjacent to the first and second indoor heat exchangers 110 and 120. The fans 171 and 172 may be controlled by the controller 180.

The air conditioning device may further include a temperature sensor 173 and a humidity sensor 174. The controller 180 may control the operation of the air conditioning device based on a detected temperature (the outdoor temperature and/or the indoor temperature) and a detected humidity in the indoor space.

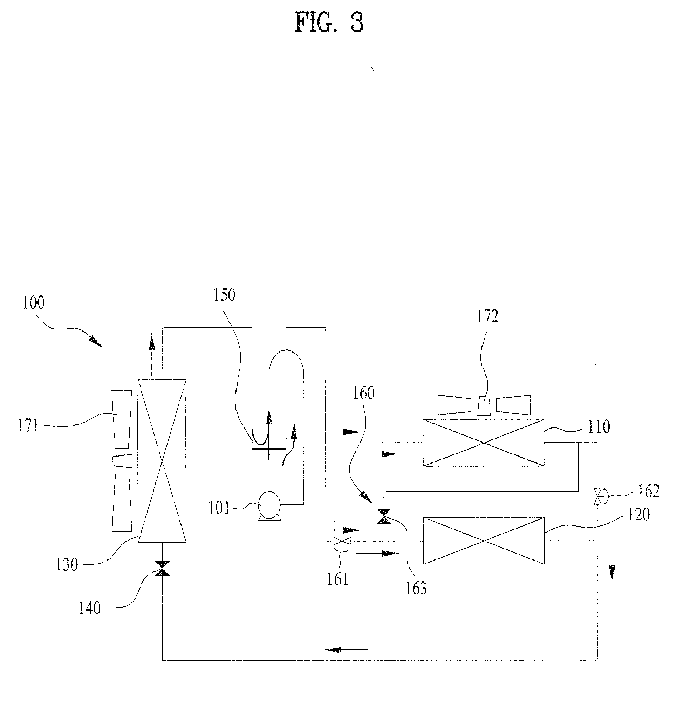

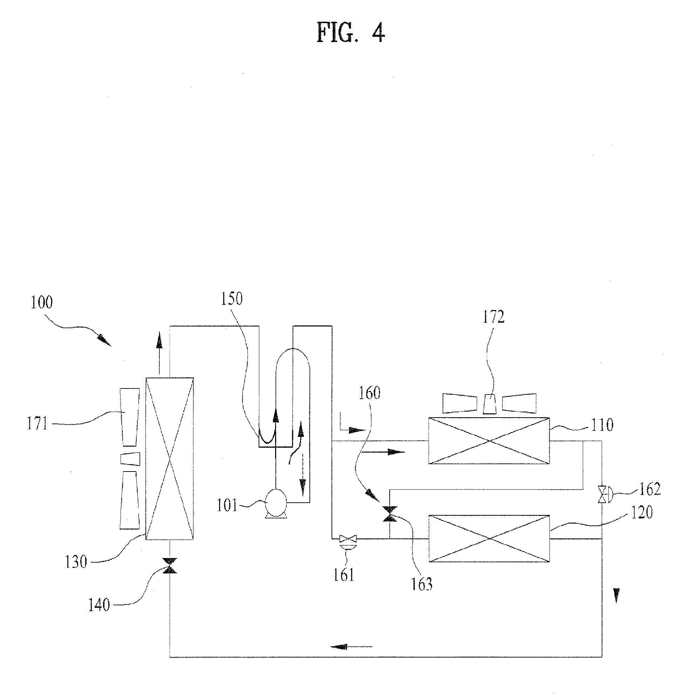

FIG. 3 is a conceptual diagram illustrating a first or cold district heating operation mode provided in the air conditioner of FIG. 1. FIG. 4 is a conceptual diagram illustrating a second or normal heating operation mode provided in the air conditioner of FIG. 1. The air conditioner 100 according to this embodiment may stably perform the heating operation at a low outdoor temperature in a cold district and may enhance heating performance or a coefficient of heating performance in the cold district.

That is, when the outdoor temperature is a preset value or less, the controller 180 may control the valve device 160 to enable the refrigerant to pass the first indoor heat exchanger 110 and the second indoor heat exchanger 120 such that the air conditioning device may be operated in a first or cold district heating operation mode to enhance the coefficient of performance. In a cold district heating operation mode, the controller may control the refrigerant to flow into the first and second heat exchangers 110 and 120 in parallel, such that the first and second heat exchangers 110 and 120 function as condensers.

In contrast, when the outdoor temperature is greater than the preset valve, the controller 180 may control the valve device 160 to enable the refrigerant to be sucked only into the first indoor heat exchanger 110 or the second indoor heat exchanger 120, such that the air conditioning device may be operated in a second or normal heating operation mode, to reduce the consumption of the battery 10. In a normal heating operation mode, the controller 180 may control the refrigerant to flow into one of the first and second heat exchangers 110 and 120 to perform as a condenser.

According to one embodiment, the second indoor heat exchanger 120 may be located adjacent to the inlet 13 of the indoor duct 12, and the first indoor heat exchanger 110 may be located adjacent the outlet 14 of the indoor duct 12. The controller 180 may control the refrigerant to flow to the first indoor heat exchanger 110 in the normal heating operation mode. In contrast, the controller 180 may control the refrigerant to flow into the second indoor heat exchanger 120 in the normal heating operation mode, based on the structure of the first and second indoor heat exchangers 110 and 120, which may be layered or unfolded in the indoor duct 12.

In other words, the controller 180 may adjust the refrigerant drawn into each of the first and second indoor heat exchangers 110 and 120 based on the determined outdoor temperature or the battery residue to enhance a COP or heating performance of the air conditioning device. Also, the controller 180 may control the air conditioning device to be operated in the cold district heating operation mode or the normal heating operation mode or to be stopped.

The controller 180 may control the valve device 160 based on the battery residue to enhance the coefficient of performance of the air conditioning device or the valve device 160 to enhance the heating performance of the air conditioning device.

The preset temperature may be, for example, approximately 0 °C. More specifically, in an environment having a temperature above 0 °C, the controller 180 may operate the air conditioning device in the normal heating operation mode. In an environment having a temperature 0 °C or less, the controller 180 may operate the air conditioning device in the cold district heating operation mode. Further, the preset temperature may be approximately -10 °C, and the air conditioning device having the structure discussed above may be operated with a COP of 1 or more, even in an outdoor temperature below approximately -10 °C.

The valve device 160 according to this embodiment may include a first solenoid valve 161 that adjusts a flow rate of the refrigerant drawn into the second indoor heat exchanger 120 from the compressor 101, a second solenoid valve 162 that adjusts a flow rate of the refrigerant exhausted from the first indoor heat exchanger 110, and an electronic expansion valve 163 that adjusts a flow rate of the refrigerant transferred to the second indoor heat exchanger 120 from the first indoor heat exchanger 110.

With reference to FIG. 3, the controller 180 may control the first and second solenoid valves 161 and 162 to be open and the electronic expansion valve 163 to be closed in the cold district heating operation mode, to flow the refrigerant to the first indoor heat exchanger 110 and the second indoor heat exchanger 120. In other words, both of the first and second indoor heat exchangers 110 and 120 may be operated as condensers in the cold district heating operation mode, to heat the indoor air circulating through the indoor duct 12. That is, the controller 180 may control the first and second solenoid valves 161 and 162 to be open and the electronic expansion valve 163 to be fully opened or closed in the cold district heating operation mode.

With reference to FIG. 4, the controller 180 may control the second solenoid valve 162 to be open and the first solenoid valve 161 and the electronic expansion valve 163 to be closed in the normal heating operation mode, to control the refrigerant to flow to the first indoor heat exchanger 110. In contrast, the controller 180 may control the first solenoid valve 161 to be open and the second solenoid valve 162 and the electronic expansion valve 163 to be closed in the normal heating operation mode, to control the refrigerant to flow to the second indoor heat exchanger 120. In other words, one of the first heat exchanger 110 or the second indoor heat exchanger 120 may be operated as a condenser in the normal heating operation mode, and the refrigerant may not flow to the other one. That is, the controller 180 may control one of the first and second solenoid valves 161 and 162 to be open and the other of the first and second solenoid valves 161 and 162 to be closed and the electronic expansion valve 163 to be closed in the normal heating operation mode.

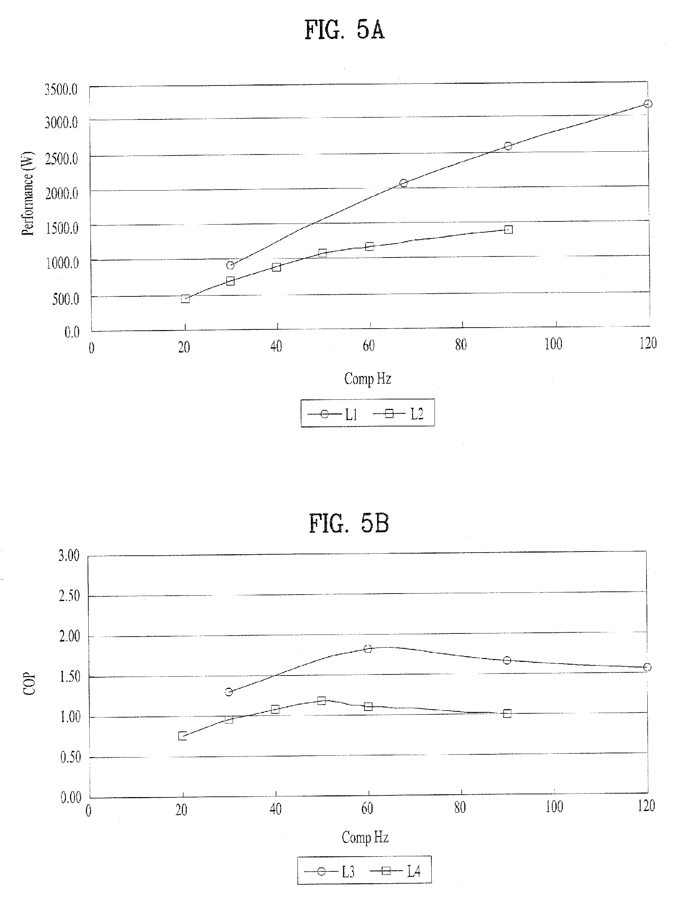

FIGs. 5A-5B are graphs illustrating heating performance (FIG. 5A) and coefficient of heating performance (FIG. 5B) of the air conditioner of FIG. 1. With reference to FIGs. 5A-5B, FIG. 5A is a graph illustrating heating performance at an outdoor temperature of approximately -10 °C. Reference numerals "L1" and "L3" refer to heating performance (W) and coefficient of heating (COP) when both of the indoor heat exchangers 110 and 120 are operated. Reference numerals "L2" and "L4" refer to heating performance (W) and coefficient of heating (COP) when one of the indoor heat exchangers 110 and 120 is operated.

As shown in FIGs. 5A-5B, the heating performance (W) and coefficient of heating performance (COP) when both of the indoor heat exchangers 110 and 120 are operated may be higher than the heating performance (W) and coefficient of heating performance (COP) when one of the indoor heat exchangers 110 and 120 is operated, under the same operation conditions of the compressor 101.

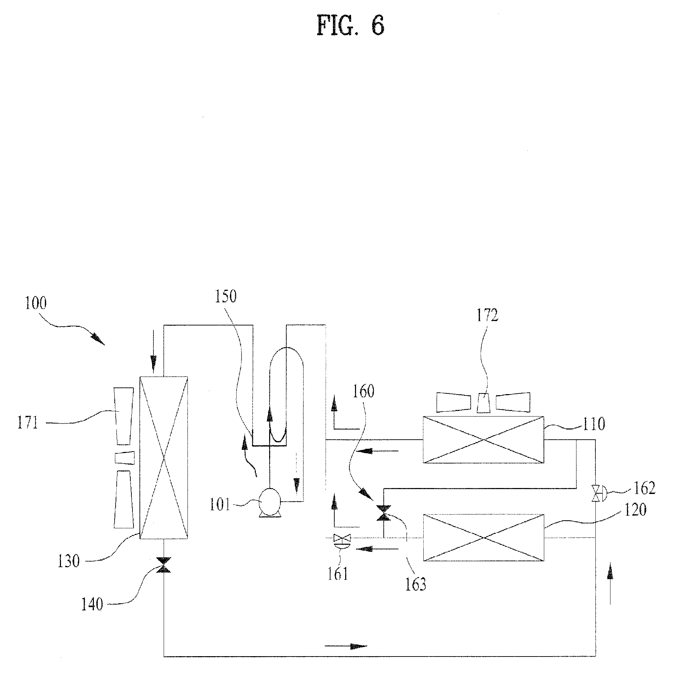

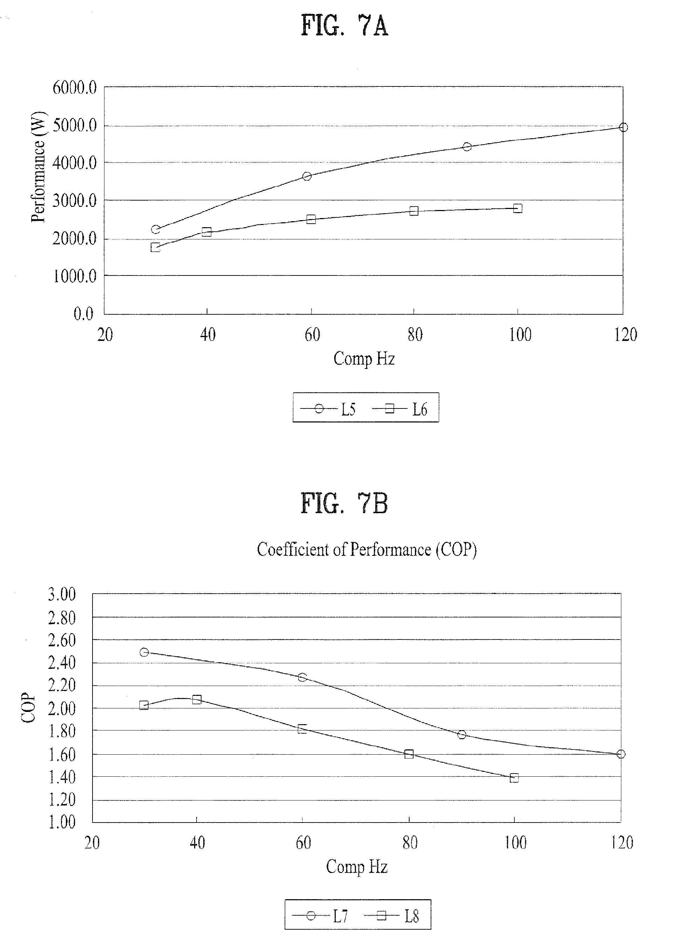

FIG. 6 is a conceptual diagram illustrating a cooling operation mode provided in the air conditioner of FIG. 1. FIGs. 7A-7B are graphs illustrating cooling performance and a coefficient of cooling performance of the air conditioner of FIG. 1. With reference to FIG. 6, the controller 180 may control the four-way valve 150 to convert the flow direction of the refrigerant. The refrigerant may pass the outdoor heat exchanger 130, the expansion valve 140, the first indoor heat exchanger 110, and the second indoor heat exchanger 120. In this instance, the first solenoid valve 161 and the second solenoid valve 162 may be open and the electronic expansion valve 163 may be closed.

With reference to FIGs. 7A-7B, FIG. 7A is a graph illustrating the cooling performance of the air conditioning device at an outdoor temperature of approximately 35 °C. Reference numerals "L5" and "L7" refer to the cooling performance (W) and coefficient of cooling performance (COP) when both of the indoor heat exchangers 110 and 120 are operated. Reference numerals "L6" and "L8" refer to the cooling performance (W) and coefficient of cooling performance (COP) when one of the indoor heat exchangers 110 and 120 is operated.

As shown in FIGs. 7A-7B, the cooling performance (W) and coefficient of cooling performance (COP) when both of the indoor heat exchangers 110 and 120 are operated may be higher than the cooling performance (W) and coefficient of cooling performance (COP) when one of the indoor heat exchangers 110 and 120 is operated, under the same operation conditions of the compressor 101.

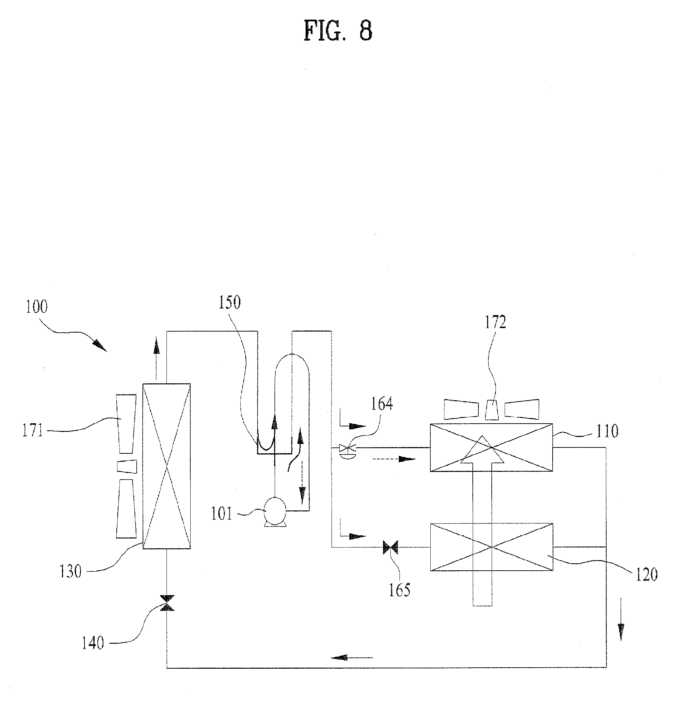

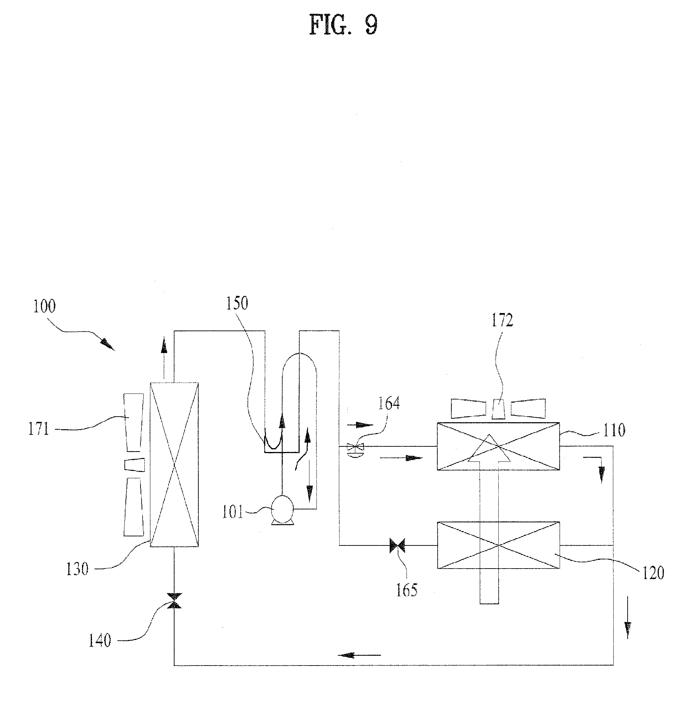

FIG. 8 is a conceptual diagram illustrating an air conditioner for an electric vehicle as a reference example. FIG. 9 a conceptual diagram illustrating a second or normal heating operation mode provided in the air conditioner of FIG. 8. The hollow arrow in FIGs. 8-9 indicates a direction of indoor air flow.

In the meantime, a flow direction of refrigerant passing through the first and second indoor heat exchangers 110 and 120 may be substantially perpendicular to a direction of air flow through an indoor air duct 12.

A valve device 160 according to this reference example may include a solenoid valve 164 that adjust a flow rate of the refrigerant drawn into the first indoor heat exchanger 110 from the compressor 101 and an electronic expansion valve 165 that adjusts a flow rate of the refrigerant drawn into the second indoor heat exchanger 120. The controller 180 may control the solenoid valve 164 and the electronic expansion valve 165 to be open in the cold district heating operation mode. The controller 180 may control the solenoid valve 164 or the electronic expansion valve 165 to be closed in the normal heating operation mode.

According to this reference example, the controller 180 may control the refrigerant to flow only into the first indoor heat exchanger 110 in the normal heating operation mode as discussed above. In this instance, the controller 180 may open the solenoid valve 164 and close the electronic expansion valve 165.

So far, the valve device 160 according to the embodiments discussed above is described as controlling the refrigerant to flow into at least one of the first indoor heat exchanger 110 and the second indoor heat exchanger 120. However, embodiments are not limited thereto and the first and second indoor heat exchangers 110 and 120 may be connected with the compressor 101 in serial or in parallel. The valve device 160 may include a proper number of solenoid valves or electronic expansion valves within the spirit and scope of the principles of this disclosure. It is obvious that positions of the solenoid valves and/or electronic expansion valves may vary.

As described above, the air conditioner for an electric vehicle according to embodiments disclosed herein may stably perform a heating operation at a low outdoor temperature in a cold district. Further, the air conditioner for an electric vehicle according to embodiments disclosed herein may enhance heating performance or coefficient of heating performance in a cold district. Furthermore, the air conditioner for an electric vehicle according to embodiments disclosed herein may enhance heating performance or coefficient of heating performance based on an outdoor temperature, considering battery efficiency.

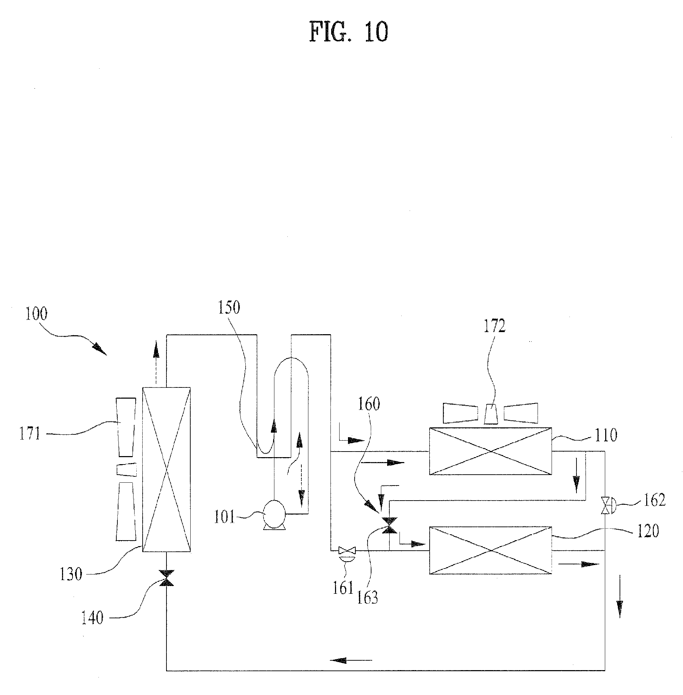

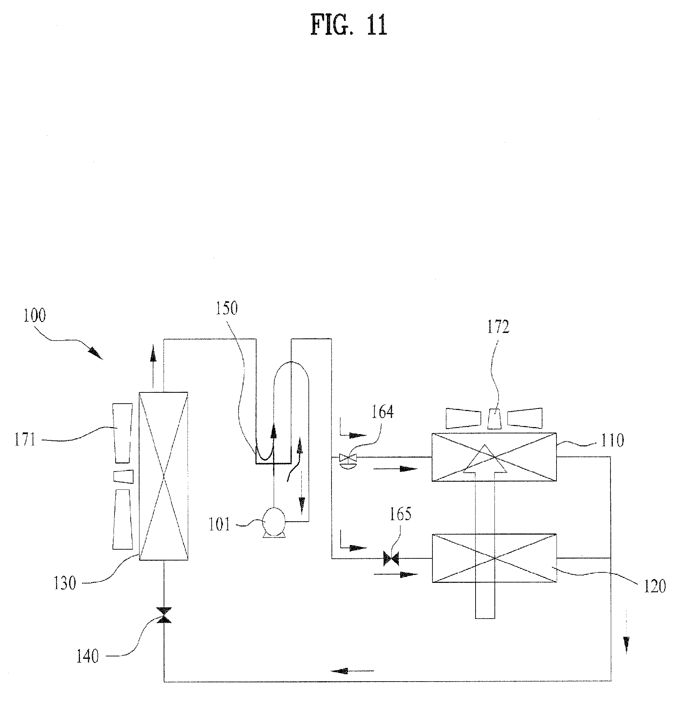

FIG. 10 is a conceptual diagram illustrating a dehumidifying mode of the air conditioner of FIG. 1. FIG. 11 is a conceptual diagram illustrating a dehumidifying mode of the air conditioner of FIG. 8.

To simultaneously perform the cold district heating operation mode and a dehumidifying mode according to embodiments, the air conditioner 100 may include the air conditioning device having the compressor 101 that compresses refrigerant, the first indoor heat exchanger 110 located adjacent to the outlet 14 of indoor air, the second indoor heat exchanger 120 located adjacent to the inlet 13 of indoor air, and the valve device 160 that adjusts the flow rate of refrigerant drawn into the first and second indoor heat exchangers 110 and 120. The air conditioner 100 may check at least two or more of a battery residue, an outdoor temperature, and an indoor humidity. The air conditioner 100 may include the controller 180 that controls the valve device 160, to enable condensation or evaporation of refrigerant performed in the first and second indoor heat exchangers 110 and 120.

In a dehumidifying mode, the controller may control the refrigerant to flow into the first and second heat exchangers 110 and 120 in series, such that one of the first and second heat exchangers 110 and 120 functions as condenser and the other of the first and second heat exchangers 110 and 120 functions as evaporate. The controller 180 may determine the battery residue and the indoor humidity, and it may control the refrigerant to be evaporated in the second indoor heat exchanger. The controller 180 may control the valve device 160 such that refrigerant is evaporated in the second indoor heat exchanger, and it may operate the air conditioning device in a dehumidifying mode.

More particularly, the controller 180 may check the battery residue and the indoor humidity. If there is sufficient battery residue to drive the vehicle, and the indoor humidity is a predetermined humidity or greater, the controller 180 may control the valve device 160 such that refrigerant is evaporated in the second indoor heat exchanger, and it may operate the air conditioning device in a dehumidifying mode. That is, in a dehumidifying mode, the controller 180 may determine the battery residue and the indoor humidity and controls the valve 160 such that the refrigerant is condensed in the first indoor heat exchanger 110 and evaporated in the second indoor heat exchanger 120, and in a cold district heating operation mode, the controller 180 may determine the residue of the battery and the outdoor temperature and controls the valve 160 such that the refrigerant is condensed in the first and second indoor heat exchangers 110 and 120. Also, in a cold district heating operation mode the first indoor heat exchanger 110 and the second indoor heat exchanger 120 are connected to the compressor 101 in parallel, and in a dehumidifying mode, the first and second heat exchangers 110 and 120 are connected in series to the compressor 101.

Also, the controller 180 may determine the battery residue and the outdoor temperature. The controller 180 may control the valve device 160 such that the refrigerant is condensed in the first and second indoor heat exchangers 110 and 120, such that it may operate the air conditioning device in a cold district heating operation mode. That is, if the battery residue remains sufficient to drive the vehicle and the outdoor temperature is a preset value or less, the controller 180 may control the valve device 160 such that the refrigerant is condensed in the first and second indoor heat exchangers 110 and 120, such that it may operate the air conditioning device in a cold district heating operation mode.

More particularly, when the indoor humidity is the predetermined humidity or greater, the controller 180 may control the air conditioning device to be operated in the cold district heating operation mode for a predetermined time period after controlling the air conditioning device to be operated in the dehumidifying mode. That is, when the outdoor temperature is a predetermined temperature or less, the controller 180 may control the air conditioning device to be operated in the cold district heating operation mode. When the indoor humidity of the electric vehicle (C) is a predetermined humidity or greater, the controller 180 may control the air conditioning device to be operated in the dehumidifying mode. In this instance, the first indoor heat exchanger 110 may be used as a condenser and the second indoor heat exchanger 120 as an evaporator, such that the indoor space may be continuously heated even in the dehumidifying mode. After the indoor humidity is reduced, the electric vehicle (C) may be again operated in the cold district heating mode, if appropriate.

More specifically, the indoor air drawn into the indoor duct 12 may be dehumidified while passing the second indoor heat exchanger 120 and the dehumidified air may be supplied to the indoor space after being heated via the first indoor heat exchanger 110.

With reference to FIG. 10, the valve device 160 according to the embodiment of FIG. 1 may include the first solenoid valve 161 that adjusts the flow rate of the refrigerant drawn into the second indoor heat exchanger 120 from the compressor 101, the second solenoid valve 162 that adjusts the flow rate of the refrigerant exhausted from the first indoor heat exchanger 110, and the electronic expansion valve 163 that adjusts the flow rate of the refrigerant transferred to the second indoor heat exchanger 120 from the first indoor heat exchanger 110. The controller 180 may control the first and second solenoid valves 161 and 162 to be open and control the electronic expansion valve 163 to be closed, in the cold district heating operation mode. The controller 180 may control the first and second solenoid valves 161 and 162 to be closed and adjust an open degree of the electronic expansion valve 163, in the dehumidifying mode.

Accordingly, the refrigerant may be drawn into the first and second indoor heat exchangers 110 and 120 in the cold district operation mode, and condensation of refrigerant may be performed in both of the first and second indoor heat exchangers 110 and 120. In contrast, the refrigerant may pass the first indoor heat exchanger 110, the electronic expansion valve 163, and the second indoor heat exchanger 120 sequentially, and the refrigerant may be condensed in the first indoor heat exchanger 110 and evaporated in the second indoor heat exchanger 120, in the dehumidifying mode. In other words, in the dehumidifying mode, the first indoor heat exchanger 110 may be operated as the condenser and the second indoor heat exchanger 120 may be operated as the evaporator, such that the dehumidified air may be exhausted toward the front glass window as discussed above.

With reference to FIG. 11, the valve device 160 according to the reference example of FIG. 8 may include the electronic expansion valve 165 that adjusts the flow rate of the refrigerant drawn into the second indoor heat exchanger 120 from the compressor 101 and the solenoid valve 165 that adjusts the flow rate of the refrigerant drawn into the first indoor heat exchanger 110. The controller 180 may control the solenoid valve 164 and the electronic expansion valve 165 to be open in the cold district heating operation mode. The controller 180 may control the solenoid valve 164 to be open in the dehumidifying mode and adjust an open degree of the electronic expansion valve 165.

Accordingly, in the cold district heating operation mode, the refrigerant may be drawn into both of the first and second indoor heat exchangers 110 and 120, and the refrigerant may be condensed in the indoor heat exchangers 110 and 120. However, in the dehumidifying mode, a predetermined amount of refrigerant may pass the solenoid valve 164 and the first indoor heat exchanger 110, and the remaining refrigerant may pass the electronic expansion valve 165 and the second indoor heat exchanger 120. Also, in the dehumidifying mode, the refrigerant may be condensed in the first indoor heat exchanger 110 and evaporated in the second indoor heat exchanger 120.

When the outdoor temperature is less than a predetermined temperature (for example, approximately 0 °C), the controller 180 may control the valve device 160 such that the refrigerant is condensed in the first indoor heat exchanger 110 and the second indoor heat exchanger 120, such that the air conditioning device is operated in the cold district heating operation mode. In contrast, when the outdoor temperature is the predetermined temperature or greater, the controller 180 may control the valve device 160 such that the refrigerant is condensed in one of the first indoor heat exchanger 110 or the second indoor heat exchanger 120 and is not drawn into the other one such that the air conditioning device may be operated in the normal heating operation mode.

The controller 180 may operate the air conditioning device in the cold district heating operation mode or the normal heating operation mode, or it may stop the air conditioning device, based on the battery residue. The controller 180 may control the valve device 160 based on the battery residue, to enhance the coefficient of heating performance of the air conditioning device or to enhance the heating performance of the air conditioning device.

The heating operation mode may be changed according to at least one of a residue of battery, a difference of an interior space temperature in comparison to a predetermined temperature, an interior space humidity, or an outdoor temperature, and an order of priority is residue of battery, interior space humidity, outdoor temperature. If the controller 180 determines that the residue of the battery is insufficient to reach an intended destination, the controller 180 stops the heating operation mode.

Conversion of the cold district heating operation mode to the normal heating operation mode is described with reference to the valve device 160 according to the embodiments disclosed herein and detailed description thereof has been omitted accordingly.

In the cold district heating operation mode, the controller 180 checks a humidity periodically, and if the humidity is higher than a predetermined value, the controller 180 changes from the cold district heating operation mode to the dehumidifying mode, and in the dehumidifying mode, the controller periodically checks the humidity and if the humidity is equal to or lower than the predetermined value, change from the dehumidifying mode to the cold district operation heating mode. Also, in the normal heating operation mode, the controller 180 checks a humidity periodically, and if the humidity is higher than a predetermined value, the controller 180 may change from the normal heating operation mode to the dehumidifying mode, and in the dehumidifying mode, the controller 180 periodically checks the humidity level and if the humidity level is equal to or lower than the predetermined level, changes form the dehumidifying mode to the normal heating operation mode.

The air conditioner having the structure discussed above may be operated in the cold district heating operation mode and the normal heating operation mode based on outdoor temperature, battery residue, and indoor humidity via a single cycle. Therefore, the air conditioner for an electric vehicle according to embodiments disclosed herein stably perform a heating operation at a low temperatures in cold districts. Further, the air conditioner for an electric vehicle according to embodiments disclosed herein may enhance heating performance or coefficient of heating performance in the cold districts. Still further, the air conditioner for an electric vehicle according to embodiments disclosed herein may enhance the heating performance or coefficient of heating performance, considering the efficiency of the battery based on an outdoor temperature. Still further, the air conditioner for an electric vehicle according to embodiments disclosed herein may perform the heating operation simultaneously with the dehumidifying operation.

Embodiments disclosed herein provide an air conditioner for an electric vehicle that is able to stably perform a heating operation at low temperatures in cold districts. Further, embodiments disclosed herein provide an air conditioner for an electric vehicle that is able to enhance heating performance or a coefficient of heating performance in cold districts.

Furthermore, embodiments disclosed herein provide an air conditioner for an electric vehicle that is able to enhance the heating performance or coefficient of heating performance, considering efficiency of a battery based on an outdoor temperature. Additionally, embodiments disclosed herein provide an air conditioner for an electric vehicle that is able to perform the heating operation simultaneously with a dehumidifying operation.

Embodiments disclosed herein provide an air conditioner for an electric vehicle driven by a battery as a driving source that may include an air conditioning unit or device including a compressor that compresses a refrigerant; first and second indoor heat exchangers that suck the refrigerant exhausted from the compressor; an expansion valve that expands the refrigerant having passed one of the first and second indoor heat exchangers; an outdoor heat exchanger that sucks the refrigerant having passed the expansion valve; a valve unit or device that adjusts a flow rate of the refrigerant sucked into the first and second indoor heat exchangers; and a controller that checks a residue of the battery and an outdoor temperature and controls the valve unit to flow the refrigerant into at least one of the first and second indoor heat exchangers to meet a required heating performance and desired coefficient of heating performance.

The controller may operate the air conditioning unit in a cold district heating operation mode by controlling the valve unit for the refrigerant to pass the first and second indoor heat exchangers to enhance the coefficient of heating performance, when the outdoor temperature is less than a predetermined temperature. The controller may operate the air conditioning unit in a normal heating operation mode by controlling the valve unit for the refrigerant to be drawn into the first indoor heat exchanger or the second indoor heat exchanger to reduce the battery residue, when the outdoor temperature is the predetermined temperature or more. The predetermined temperature may be 0 °C.

The first indoor heat exchanger may be located adjacent to an outlet of indoor air, and the second indoor heat exchanger may be located adjacent to an inlet of indoor air. The controller may control the refrigerant to flow into the first indoor heat exchanger in the normal heating operation mode.

The controller may operate the air conditioning unit in the cold district heating operation mode or the normal heating operation mode or stop the operation of the air conditioning unit, based on a residue of the battery. The controller may control the valve unit to enhance a coefficient of heating performance of the air conditioning unit or heating performance of the air conditioning unit, based on a residue of the battery.

The valve unit may include a first solenoid valve that adjusts a flow rate of refrigerant drawn into the second indoor heat exchanger from the compressor, a second solenoid valve that adjusts a flow rate of the refrigerant exhausted from first indoor heat exchanger, and a first electronic expansion valve that adjusts a flow rate of the refrigerant transferred to the second indoor heat exchanger from the first indoor heat exchanger. The controller may control the first and second solenoid valves to be open and the first electronic expansion valve to be closed in the cold district heating operation mode, and may control the second solenoid valve to be open and the first solenoid valve and the first electronic expansion valve to be closed in the normal heating operation mode.

The valve unit may include a third solenoid valve that adjusts a flow rate of refrigerant drawn into the first indoor heat exchanger from the compressor and a second electronic expansion valve that adjusts a flow rate of refrigerant drawn into the second indoor heat exchanger. The controller may control the third solenoid valve and the second electronic expansion valve to be open in a cold district heating operation mode, and the first solenoid valve or the second electronic expansion valve to be closed in a normal heating operation mode.

Embodiments disclosed herein further provide an air conditioner for an electric vehicle driven by a battery as a driving source that may include an air conditioning unit or device including a compressor that compresses a refrigerant; a first indoor heat exchanger arranged adjacent to an outlet of indoor air that sucks and a second indoor heat exchanger arranged adjacent to an inlet of indoor air, the first and second indoor heat exchangers sucking the refrigerant exhausted from the compressor; and a valve unit or device that adjusts a flow rate of the refrigerant sucked into the first and second indoor heat exchangers; and a controller that checks two or more of a residue of the battery, an outdoor temperature, and an indoor humidity and to control the valve unit for the refrigerant to be condensed or evaporated in the first and second indoor heat exchangers.

An air conditioner for an electric vehicle according to embodiments may perform a heating operation at low temperatures in cold districts stably. Further, an air conditioner for an electric vehicle according to embodiments may enhance heating performance or coefficient of heating performance in the cold districts.

Furthermore, an air conditioner for an electric vehicle according to embodiments may enhance heating performance or a coefficient of heating performance, considering an efficiency of the battery based on an outdoor temperature. Still further, an air conditioner for an electric vehicle according to embodiments may perform a heating operation simultaneously with a dehumidifying operation.

It is to be understood that both the foregoing general description and the following detailed description of the embodiments or arrangements are exemplary and explanatory and are intended to provide further explanation of the embodiments as claimed.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the invention as defined by the appended claims. In addition to variations and modifications in the component parts and/or arrangements, alternative uses will also be apparent to those skilled in the art, within the scope of the appended claims.

## Claims

1. An air conditioner for an electric vehicle driven by a battery as a driving source, the air conditioner comprising:
a compressor (101) that compresses a refrigerant;
first and second indoor heat exchangers (110) and (120) that suck the refrigerant exhausted from the compressor (101);
an expansion valve (140) that expands the refrigerant having passed at least one of the first indoor heat exchanger (110) or the second indoor heat exchanger (120);
an outdoor heat exchanger (130) that sucks the refrigerant having passed the expansion valve (140); and
at least one valve (160) that adjusts a flow of the refrigerant sucked into the first and second indoor heat exchangers (110) and (120),
**characterized by**:
a controller (180) that controls the at least one valve (160) to flow the refrigerant into the first indoor heat exchanger (110) and the second indoor heat exchanger (120) in series or in parallel selectively according to a heating operation mode.

2. The air conditioner according to claim 1, wherein in a high temperature heating operation mode for a high outdoor temperature, the controller (180) controls the refrigerant to flow into one of the first and second heat exchangers (110) and (120) to perform as a condenser, and wherein in a low temperature heating operation mode for a low outdoor temperature, the controller controls the refrigerant to flow into the first and second heat exchangers (110) and (120) in parallel, such that the first and second heat exchangers (110) and (120) function as condensers.

3. The air conditioner according to claim 2, wherein in a dehumidifying mode, the controller (180) determines the battery residue and the indoor humidity and controls the valve (160) such that the refrigerant is condensed in the first indoor heat exchanger (110) and evaporated in the second indoor heat exchanger (120), and wherein in the low temperature heating operation mode, the controller (180) determines the residue of the battery and the outdoor temperature and controls the valve (160) such that the refrigerant is condensed in the first and second indoor heat exchangers (110) and (120).

4. The air conditioner according to claim 2 or 3, wherein, in the low temperature heating operation mode the first indoor heat exchanger (110) and the second indoor heat exchanger (120) are connected to the compressor (101) in parallel, and wherein in the dehumidifying mode, the first and second heat exchangers (110) and (120) are connected in series to the compressor (101).

5. The air conditioner according to any one of claims 1 to 4, wherein the first indoor heat exchanger (110) is located adjacent to an outlet (14) for an indoor air duct (12) and the second indoor heat exchanger (120) is located adjacent to an inlet (13) for the indoor air duct (12).

6. The air conditioner according to any one of claims 1 to 5, wherein, in a dehumidifying mode, the controller controls the refrigerant to flow into the first and second heat exchangers (110) and (120) in series, such that one of the first and second heat exchangers (110) and (120) functions as condenser and the other of the first and second heat exchangers (110) and (120) functions as evaporator.

7. The air conditioner according to any one of claims 1 to 6, wherein the valve (160) comprises:
a first solenoid valve (161) that adjusts a flow rate of refrigerant sucked into the second indoor heat exchanger (120) from the compressor (101);
a second solenoid (162) that adjusts a flow rate of refrigerant exhausted from the first indoor heat exchanger (110); and
an electronic expansion valve (163) that adjusts a flow rate of refrigerant transferred to the second indoor heat exchanger (120) from the first indoor heat exchanger (110), and
wherein the controller (180) controls the first and second solenoid valves (161) and (162) to be closed and adjusts an open degree of the electronic expansion valve (163) in the dehumidifying mode.

8. The air conditioner according to any one of claims 2 to 7, wherein the valve (160) comprises:
a first solenoid valve (161) that adjusts a flow rate of refrigerant sucked into the second indoor heat exchanger (120) from the compressor (101);
a second solenoid (162) that adjusts a flow rate of refrigerant exhausted from the first indoor heat exchanger (110); and
an electronic expansion valve (163) that adjusts a flow rate of refrigerant transferred to the second indoor heat exchanger (120) from the first indoor heat exchanger (110), and
wherein the controller (180) controls the first and second solenoid valves (161) and (162) to be open and the electronic expansion valve (163) to be fully open or closed in the low temperature heating operation mode.

9. The air conditioner according to any one of claims 2 to 8, wherein, in the low temperature heating operation mode, the controller (180) checks a humidity periodically, and if the humidity is higher than a predetermined value, the controller (180) changes from the low temperature heating operation mode to the dehumidifying mode, and in the dehumidifying mode, the controller periodically checks the humidity and if the humidity is equal to or lower than the predetermined value, changes from the dehumidifying mode to the low temperature operation heating mode.

10. The air conditioner according to claim 8,
wherein the controller (180) controls one of the first and second solenoid valves (161) and (162) to be open and the other of the first and second solenoid valves (161) and (162) to be closed and the electronic expansion valve (163) to be closed in the high temperature heating operation mode.

11. The air conditioner according to any one of claims 2 to 10, wherein, in the high temperature heating operation mode, the controller (180) checks a humidity periodically, and if the humidity is higher than a predetermined value, the controller (180) changes from the high temperature heating operation mode to the dehumidifying mode, and in the dehumidifying mode, the controller (180) periodically checks the humidity level and if the humidity level is equal to or lower than the predetermined level, changes form the dehumidifying mode to the high temperature heating operation mode.

12. The air conditioner of any one of claims 1 to 11, wherein a flow direction of refrigerant passing through the first and second indoor heat exchangers (110) and (120) is substantially perpendicular to a direction of air flow through an indoor air duct (12).

13. The air conditioner of any one of claims 1 to 12, wherein the heating operation mode is changed according to at least one of a residue of battery, a difference of an interior space temperature in comparison to a predetermined temperature, an interior space humidity, or an outdoor temperature, and
wherein an order of priority is residue of battery, interior space humidity, outdoor temperature, and
wherein preferably if the controller (180) determines that the residue of the battery is insufficient to reach an intended destination, the controller (180) stops the heating operation mode.

## Patentansprüche

1. Klimaanlage für ein Elektrofahrzeug, das von einer Batterie als eine Antriebsquelle angetrieben wird, wobei die Klimaanlage aufweist:
einen Kompressor (101), der ein Kältemittel komprimiert;
erste und zweite Innenwärmetauscher (110) und (120), die das von dem Kompressor (101) abgeführte Kältemittel einsaugen;
ein Expansionsventil (140), welches das Kältemittel, das den ersten Innenwärmetauscher (110) und/oder den zweiten Innenwärmetauscher (120) durchlaufen hat, expandiert;
einen Außenwärmetauscher (130), der das Kältemittel, welches das Expansionsventil (140) durchlaufen hat, einsaugt; und
wenigstens ein Ventil (160), das eine Strömung des in die ersten und zweiten Innenwärmetauscher (110) und (120) eingesaugten Kältemittels einstellt,
**gekennzeichnet durch**:
eine Steuerung (180), die das wenigstens eine Ventil (160) steuert, um das Kältemittel gemäß einer Heizbetriebsart selektiv nacheinander oder parallel in den ersten Innenwärmetauscher (110) und den zweiten Innenwärmetauscher (120) strömen zu lassen.

2. Klimaanlage nach Anspruch 1, wobei die Steuerung (180) das Kältemittel in einer Hochtemperaturheizbetriebsart für eine hohe Außentemperatur steuert, so dass es in einen der ersten und zweiten Innenwärmetauscher (110) und (120) strömt, der als ein Kondensator arbeiten soll, und wobei die Steuerung das Kältemittel in einer Niedertemperaturheizbetriebsart für eine niedrige Außentemperatur steuert, so dass es parallel in die ersten und zweiten Innenwärmetauscher (110) und (120) strömt, so dass die ersten und zweiten Innenwärmetauscher (110) und (120) als Kondensatoren arbeiten.

3. Klimaanlage nach Anspruch 2, wobei die Steuerung (180) in einer Entfeuchtungsbetriebsart den Batterierest und die Innenfeuchtigkeit bestimmt und das Ventil (160) derart steuert, dass das Kältemittel in dem ersten Innenwärmetauscher (110) kondensiert und in dem zweiten Innenwärmetauscher (120) verdampft wird, und wobei die Steuerung (180) in der Niedertemperaturbetriebsart den Batterierest und die Außentemperatur bestimmt und das Ventil (160) derart steuert, dass das Kältemittel in den ersten und zweiten Innenwärmetauschern (110) und (120) kondensiert wird.

4. Klimaanlage nach Anspruch 2 oder 3, wobei der erste Innenwärmetauscher (110) und der zweite Innenwärmetauscher (120) in der Niedertemperaturheizbetriebsart parallel zu dem Kompressor (101) verbunden sind, und wobei die ersten und zweiten Wärmetauscher (110) und (120) in der Entfeuchtungsbetriebsart in Reihe zu dem Kompressor (101) verbunden sind.

5. Klimaanlage nach einem der Ansprüche 1 bis 4, wobei der erste Innenwärmetauscher (110) benachbart zu einem Auslass (14) für einen Innenluftkanal (12) angeordnet ist und der zweite Innenwärmetauscher (120) benachbart zu einem Einlass (13) für den Innenluftkanal (12) angeordnet ist.

6. Klimaanlage nach einem der Ansprüche 1 bis 5, wobei die Steuerung das Kältemittel in einer Entfeuchtungsbetriebsart steuert, um nacheinander in die ersten und zweiten Wärmetauscher (110) und (120) zu strömen, so dass einer der ersten und zweiten Wärmetauscher (110) und (120) als ein Kondensator arbeitet und der andere der ersten und zweiten Wärmetauscher (110) und (120) als Verdampfer arbeitet.

7. Klimaanlage nach einem der Ansprüche 1 bis 6, wobei das Ventil (160) aufweist:
ein erstes Elektromagnetventil (161), das einen Durchsatz von Kältemittel einstellt, das von dem Kompressor (101) in den zweiten Innenwärmetauscher (120) eingesaugt wird;
ein zweites Elektromagnetventil (162), das einen Durchsatz von Kältemittel einstellt, das von dem ersten Innenwärmetauscher (110) abgeführt wird; und
ein elektronisches Expansionsventil (163), das einen Durchsatz von Kältemittel einstellt, das von dem ersten Innenwärmetauscher (110) an den zweiten Innenwärmetauscher (120) überführt wird, und
wobei die Steuerung (180) in der Entfeuchtungsbetriebsart die ersten und zweiten Elektromagnetventile (161) und (162) steuert, so dass sie geschlossen sind, und einen Öffnungsgrad des elektronischen Expansionsventils (163) einstellt.

8. Klimaanlage nach einem der Ansprüche 2 bis 7, wobei das Ventil (160) aufweist:
ein erstes Elektromagnetventil (161), das einen Durchsatz von Kältemittel einstellt, das von dem Kompressor (101) in den zweiten Innenwärmetauscher (120) eingesaugt wird;
ein zweites Elektromagnetventil (162), das einen Durchsatz von Kältemittel einstellt, das von dem ersten Innenwärmetauscher (110) abgeführt wird; und
ein elektronisches Expansionsventil (163), das einen Durchsatz von Kältemittel einstellt, das von dem ersten Innenwärmetauscher (110) an den zweiten Innenwärmetauscher (120) überführt wird, und
wobei die Steuerung (180) in der Niedertemperaturheizbetriebsart die ersten und zweiten Elektromagnetventile (161) und (162) steuert, so dass sie offen sind, und das elektronische Expansionsventil (163) steuert, so dass es ganz offen oder geschlossen ist.

9. Klimaanlage nach einem der Ansprüche 2 bis 8, wobei die Steuerung (180) eine Feuchtigkeit in der Niedrigtemperaturheizbetriebsart regelmäßig prüft, und die Steuerung (180), wenn die Feuchtigkeit höher als ein vorgegebener Wert ist, von der Niedertemperaturheizbetriebsart auf die Entfeuchtungsbetriebsart wechselt, und die Steuerung (180) die Feuchtigkeit in der Entfeuchtungsbetriebsart regelmäßig prüft, und, wenn die Feuchtigkeit kleiner oder gleich dem vorgegebenen Wert ist, von der Entfeuchtungsbetriebsart auf die Niedertemperaturheizbetriebsart wechselt.

10. Klimaanlage nach Anspruch 8,
wobei die Steuerung (180) eines der ersten und zweiten Elektromagnetventile (161) und (162) in der Hochtemperaturheizbetriebsart steuert, so dass es offen ist, und das andere der ersten und zweiten Elektromagnetventile (161) und (162) steuert, so dass es geschlossen ist, und das elektronische Expansionsventil (163), so dass es geschlossen ist.

11. Klimaanlage nach einem der Ansprüche 2 bis 10, wobei die Steuerung (180) die Feuchtigkeit in der Hochtemperaturheizbetriebsart regelmäßig prüft, und die Steuerung (180), wenn die Feuchtigkeit höher als ein vorgegebener Wert ist, von der Hochtemperaturheizbetriebsart auf die Entfeuchtungsbetriebsart wechselt, und die Steuerung (180) die Feuchtigkeit in der Entfeuchtungsbetriebsart regelmäßig prüft, und, wenn der Feuchtigkeitspegel kleiner oder gleich dem vorgegebenen Pegel ist, von der Entfeuchtungsbetriebsart auf die Hochtemperaturheizbetriebsart wechselt.

12. Klimaanlage nach einem der Ansprüche 1 bis 11, wobei eine Strömungsrichtung des Kältemittels, das die ersten und zweiten Innenwärmetauscher (110) und (120) durchläuft, im Wesentlichen senkrecht zu einer Richtung der Luftströmung durch einen Innenluftkanal (12) ist.

13. Klimaanlage nach einem der Ansprüche 1 bis 12, wobei die Heizbetriebsart gemäß dem Batterierest und/oder einer Differenz einer Innenraumtemperatur im Vergleich zu einer vorgegebenen Temperatur und/oder einer Innenraumfeuchtigkeit und/oder einer Außentemperatur geändert wird, und
wobei eine Prioritätsreihenfolge der Batterierest, die Innenraumfeuchtigkeit, die Außentemperatur ist, und
wobei die Steuerung (180) vorzugsweise die Heizbetriebsart stoppt, wenn die Steuerung (180) bestimmt, dass der Rest der Batterie nicht ausreichend ist, um ein geplantes Ziel zu erreichen.

## Revendications

1. Climatiseur pour un véhicule électrique entraîné par une batterie en tant que source d'entraînement, le climatiseur comprenant :
un compresseur (101) qui comprime un fluide frigorigène ;
des premier et second échangeurs de chaleur d'intérieur (110) et (120) qui aspirent le fluide frigorigène déchargé du compresseur (101) ;
une vanne de détente (140) qui détend le fluide frigorigène ayant traversé au moins l'un du premier échangeur de chaleur d'intérieur (110) ou du second échangeur de chaleur d'intérieur (120) ;
un échangeur de chaleur d'extérieur (130) qui aspire le fluide frigorigène ayant traversé la vanne de détente (140) ; et
au moins une vanne (160) qui ajuste un débit du fluide frigorigène aspiré dans les premier et second échangeurs de chaleur d'intérieur (110) et (120),
**caractérisé par** :
une unité de commande (180) qui commande la au moins une vanne (160) pour faire circuler le fluide frigorigène dans le premier échangeur de chaleur d'intérieur (110) et le second échangeur de chaleur d'intérieur (120) en série ou en parallèle sélectivement selon un mode de fonctionnement de chauffage.

2. Climatiseur selon la revendication 1, dans lequel dans un mode de fonctionnement de chauffage à haute température pour une haute température extérieure, l'unité de commande (180) commande le fluide frigorigène pour qu'il circule dans l'un des premier et second échangeurs de chaleur (110) et (120) pour fonctionner comme un condenseur, et dans lequel dans un mode de fonctionnement de chauffage à basse température pour une basse température extérieure, l'unité de commande commande le fluide frigorigène pour qu'il circule dans les premier et second échangeurs de chaleur (110) et (120) en parallèle, de telle sorte que les premier et second échangeurs de chaleur (110) et (120) fonctionnent comme des condenseurs.

3. Climatiseur selon la revendication 2, dans lequel dans un mode de déshumidification, l'unité de commande (180) détermine le résidu de batterie et l'humidité intérieure et commande la vanne (160) de telle sorte que le fluide frigorigène soit condensé dans le premier échangeur de chaleur d'intérieur (110) et évaporé dans le second échangeur de chaleur d'intérieur (120), et dans lequel dans le mode de fonctionnement de chauffage à basse température, l'unité de commande (180) détermine le résidu de la batterie et la température extérieure et commande la vanne (160) de telle sorte que le fluide frigorigène soit condensé dans les premier et second échangeurs de chaleur d'intérieur (110) et (120).

4. Climatiseur selon la revendication 2 ou 3, dans lequel, dans le mode de fonctionnement de chauffage à basse température, le premier échangeur de chaleur d'intérieur (110) et le second échangeur de chaleur d'intérieur (120) sont reliés au compresseur (101) en parallèle, et dans lequel dans le mode de déshumidification, les premier et second échangeurs de chaleur (110) et (120) sont reliés en série au compresseur (101).

5. Climatiseur selon l'une quelconque des revendications 1 à 4, dans lequel le premier échangeur de chaleur d'intérieur (110) est situé adjacent à un refoulement (14) pour un conduit d'air d'intérieur (12) et le second échangeur de chaleur d'intérieur (120) est situé adjacent à une admission (13) pour le conduit d'air d'intérieur (12).

6. Climatiseur selon l'une quelconque des revendications 1 à 5, dans lequel, dans un mode de déshumidification, l'unité de commande commande le fluide frigorigène pour qu'il circule dans les premier et second échangeurs de chaleur (110) et (120) en série, de sorte que l'un des premier et second échangeurs de chaleur (110) et (120) fonctionne comme un condenseur et l'autre des premier et second échangeurs de chaleur (110) et (120) fonctionne comme un évaporateur.

7. Climatiseur selon l'une quelconque des revendications 1 à 6, dans lequel la vanne (160) comprend :
une première électrovanne (161) qui ajuste un débit de fluide frigorigène aspiré dans le second échangeur de chaleur d'intérieur (120) depuis le compresseur (101) ;
une seconde électrovanne (162) qui ajuste un débit de fluide frigorigène déchargé du premier échangeur de chaleur d'intérieur (110) ; et
une vanne de détente électronique (163) qui ajuste un débit de fluide frigorigène transféré au second échangeur de chaleur d'intérieur (120) depuis le premier échangeur de chaleur d'intérieur (110), et
dans lequel l'unité de commande (180) commande les première et seconde électrovannes (161) et (162) pour qu'elles soient fermées et ajuste un degré d'ouverture de la vanne de détente électronique (163) dans le mode de déshumidification.

8. Climatiseur selon l'une quelconque des revendications 2 à 7, dans lequel la vanne (160) comprend :
une première électrovanne (161) qui ajuste un débit de fluide frigorigène aspiré dans le second échangeur de chaleur d'intérieur (120) depuis le compresseur (101) ;
une seconde électrovanne (162) qui ajuste un débit de fluide frigorigène déchargé du premier échangeur de chaleur d'intérieur (110) ; et
une vanne de détente électronique (163) qui ajuste un débit de fluide frigorigène transféré au second échangeur de chaleur d'intérieur (120) depuis le premier échangeur de chaleur d'intérieur (110), et
dans lequel l'unité de commande (180) commande les première et seconde électrovannes (161) et (162) pour qu'elles soient ouvertes et la vanne de détente électronique (163) pour qu'elle soit pleinement ouverte ou fermée dans le mode de fonctionnement de chauffage à basse température.

9. Climatiseur selon l'une quelconque des revendications 2 à 8, dans lequel, dans le mode de fonctionnement de chauffage à basse température, l'unité de commande (180) vérifie l'humidité périodiquement, et si l'humidité est plus élevée qu'une valeur prédéterminée, l'unité de commande (180) passe du mode de fonctionnement de chauffage à basse température au mode de déshumidification, et dans le mode de déshumidification, l'unité de commande vérifie périodiquement l'humidité et si l'humidité est inférieure ou égale à la valeur prédéterminée, passe du mode de déshumidification au mode de fonctionnement de chauffage à basse température.

10. Climatiseur selon la revendication 8,
dans lequel l'unité de commande (180) commande l'une des première et seconde électrovannes (161) et (162) pour qu'elle soit ouverte et l'autre des première et seconde électrovannes (161) et (162) pour qu'elle soit fermée et la vanne de détente électronique (163) pour qu'elle soit fermée dans le mode de fonctionnement de chauffage à haute température.

11. Climatiseur selon l'une quelconque des revendications 2 à 10, dans lequel, dans le mode de fonctionnement de chauffage à haute température, l'unité de commande (180) vérifie l'humidité périodiquement, et si l'humidité est plus élevée qu'une valeur prédéterminée, l'unité de commande (180) passe du mode de fonctionnement de chauffage à haute température au mode de déshumidification, et dans le mode de déshumidification, l'unité de commande (180) vérifie périodiquement le niveau d'humidité et si le niveau d'humidité est inférieur ou égal au niveau prédéterminé, passe du mode de déshumidification au mode de fonctionnement de chauffage à haute température.

12. Climatiseur selon l'une quelconque des revendications 1 à 11, dans lequel une direction de circulation de fluide frigorigène passant par les premier et second échangeurs de chaleur d'intérieur (110) et (120) est sensiblement perpendiculaire à une direction de circulation d'air à travers un conduit d'air d'intérieur (12).

13. Climatiseur selon l'une quelconque des revendications 1 à 12, dans lequel le mode de fonctionnement de chauffage est changé selon au moins l'un d'un résidu de batterie, d'une différence d'une température d'espace intérieur en comparaison avec une température prédéterminée, d'une humidité d'espace intérieur, ou d'une température extérieure, et
dans lequel un ordre de priorité est le résidu de batterie, l'humidité d'espace intérieur, la température extérieure, et
dans lequel de préférence si l'unité de commande (180) détermine que le résidu de la batterie est insuffisant pour atteindre une destination recherchée, l'unité de commande (180) interrompt le mode de fonctionnement de chauffage.
